# EUROPÄISCHE PATENTSCHRIFT

(11) **EP 3 131 740 B1**
(45) Veröffentlichungstag und Bekanntmachung des Hinweises auf die Patenterteilung: **12.10.2022**
(21) Anmeldenummer: 15722215.9
(22) Anmeldetag: 13.05.2015
(51) Int. Cl.: B33Y 40/00, B33Y 30/00, B33Y 10/00, B23K 26/14, B22F 3/105, B23K 26/342, B23K 26/142, B23K 101/00, B29C 64/364, B29C 64/393, B22F 10/20, B22F 10/30, B22F 12/00, B29C 64/153

(54) **STEUEREINHEIT, VORRICHTUNG UND VERFAHREN ZUM HERSTELLEN EINES DREIDIMENSIONALEN OBJEKTS**
CONTROL UNIT, DEVICE, AND METHOD FOR THE PRODUCTION OF A THREE-DIMENSIONAL OBJECT
UNITÉ DE COMMANDE, DISPOSITIF ET PROCÉDÉ DE FABRICATION D'UN OBJET EN TROIS DIMENSIONS

(30) Priorität: 14.05.2014 DE 102014209161
(43) Veröffentlichungstag der Anmeldung: 22.02.2017
(73) Patentinhaber: EOS GmbH Electro Optical Systems, 82152 Krailling (DE)
(72) Erfinder: SCHILLING, Alexander, 81377 München (DE); FEY, Georg, 80336 München (DE)
(74) Vertreter: Prüfer & Partner mbB Patentanwälte · Rechtsanwälte
(86) Internationale Anmeldenummer: PCT/EP2015/060694
(87) Internationale Veröffentlichungsnummer: WO 2015/173355

(56) Entgegenhaltungen:
- WO-A1-2014/199150
- DE-A1-102004 031 881
- DE-A1-102012 014 841

## Beschreibung

Die vorliegende Erfindung bezieht sich auf eine Vorrichtung zum Herstellen eines dreidimensionalen Objektes durch schichtweises Verfestigen von Aufbaumaterial an den dem Querschnitt des herzustellenden Objektes in der jeweiligen Schicht entsprechenden Stellen durch Energieeinbringung. Sie bezieht sich außerdem auf eine Steuereinheit für eine derartige Vorrichtung und auf ein Verfahren zum Bewegen und/oder Orientieren einer Gasabsaugdüse.

Eine Vorrichtung dieser Art wird beispielsweise zum Rapid Prototyping, Rapid Tooling oder Rapid Manufacturing verwendet. Ein Beispiel eines solchen Verfahrens, das unter dem Namen "Selektives Lasersintern oder Laserschmelzen" bekannt ist, sowie eine zugehörige Vorrichtung zur Durchführung des Verfahrens sind in der Druckschrift DE 195 14 740 C1 beschrieben. Gemäß dieser Druckschrift wird zunächst mittels eines Beschichters eine dünne Schicht des pulverförmigen Aufbaumaterials aufgetragen und dieses anschließend an den dem jeweiligen Querschnitt des Objektes entsprechenden Stellen durch Einwirken eines Laserstrahls verfestigt, das heißt aufgeschmolzen und/oder verschmolzen und unter Bildung eines Materialverbunds erstarrt. Eine Verfestigungsstelle ist in diesem Sinne ein Ort, der diesem Verfestigungsprozess unterzogen wird, d. h. an dem insbesondere das Auf- und/oder Verschmelzen (aktuell) erfolgt. Die Verfestigungsstelle kann daher auch als Schmelzstelle bezeichnet werden. Die beiden Schritte des Auftragens und des Verfestigens werden abwechselnd solange wiederholt, bis das herzustellende dreidimensionale Objekt fertiggestellt ist.

Beim Bestrahlen mit dem Laserstrahl entstehen je nach Art des verwendeten Materials, insbesondere beim Sintern oder Schmelzen von Metallpulver, Spratzer, Rauche, Schmauche, Dämpfe und/oder Gase, die sich in die Prozesskammer hinein ausbreiten. Diese können sich störend auf den Fertigungsprozess auswirken, beispielsweise indem sie die Ausbreitung des Laserstrahls stören, sich auf dem Einkoppelfenster für den Laserstrahl niederschlagen oder sich auf bzw. in der dem Laserstrahl zugewandten Oberfläche der Pulverschicht ablagern und beim Verfestigen nachfolgender Objektstellen störende Einschlüsse bilden, die die Qualität des fertiggestellten Objekts verringern, oder das Aufbringen der nachfolgenden Schicht negativ beeinflussen.

Um solche Verschmutzungen aus der Prozesskammer zu entfernen, schlägt DE 198 53 947 C1 eine Prozesskammer vor, bei der an zwei gegenüberliegenden Enden ein Schutzgas-Einlass und ein Schutzgas-Auslass angeordnet sind, durch die ein gerichteter Schutzgasstrom durch die Prozesskammer erzeugt wird. Außerdem sind in diesem Patent in den Seitenflächen eines erhöhten Bereichs, in dessen Deckfläche sich ein Einkoppelfenster für die einzukoppelnde Laserstrahlung befindet, weitere Einlassöffnungen für ein Schutzgas angeordnet. Ein durch diese Öffnungen eintretender Schutzgasstrom schützt das Einkoppelfenster vor Verschmutzungen.

In WO 92/08592 A1 wird in einer Ausführungsform eine Lasersintervorrichtung beschrieben, bei der ein Gasstrom in der Einfallrichtung eines Laserstrahls von oben auf die Schicht aufgebrachten Pulvers geleitet wird und seitlich durch eine Ringdüse abgesaugt wird, die die gesamte Arbeitsfläche umgibt, in der das Objekt aufgebaut wird.

DE 196 49 865 C1 beschreibt ein Verfahren zum Herstellen eines Formkörpers, bei dem in einer Ausführungsform durch eine Einblasdüse, die mit dem Laserstrahl mitbewegt wird, eine lokal begrenzte Schutzgasströmung über eine Aufschmelzstelle geleitet wird, an der Pulver durch einen Laserstrahl aufgeschmolzen wird.

In DE 10 2004 031 881 A1 wird eine Vorrichtung zum Absaugen von Gasen, Dämpfen und/oder Partikeln aus dem Arbeitsbereich einer Laserbearbeitungsmaschine mit mindestens einer Absaugöffnung beschrieben, wobei die Absaugöffnung mit einer Unterdruck erzeugenden Einrichtung verbunden ist und wobei die Absaugöffnung an der Innenseite eines über dem Arbeitsbereich positionierten, mit den Arbeitsbereich umgebenden Wandungen versehenen Absaugelements angeordnet ist.

In der WO 2014/199150 A1 ist eine Vorrichtung zum additiven Fertigen von Bauteilen durch schichtweises Verfestigen von Material offenbart. Die Vorrichtung umfasst eine Prozesskammer mit einem darin befindlichen Arbeitsbereich, einen Hochenergiestrahl zum Verfestigen von Material und eine Strömungsvorrichtung zum Erzeugen einer Gasströmung von einem Gaseinlass zu einem Gasauslass in zumindest einem Teil des Arbeitsbereichs. Der Gaseinlass und der Gasauslass sind dabei innerhalb der Prozesskammer beweglich angeordnet.

Lasersintervorrichtungen haben heutzutage relativ große Baufelder, auf denen die Pulverschicht aufgebracht und verfestigt wird, beispielsweise in der Größenordnung von 400 x 400 mm. Bei Baufeldern dieser Größe ist es möglich, dass größere und schwerere Partikel durch den Gasstrom nicht vollständig abtransportiert werden, sondern sich während des Transports durch die Prozesskammer auf der Oberfläche der Pulverschicht absetzen. Solche Partikel bilden weiterhin beim Aufbringen und Verfestigen einer nachfolgenden Pulverschicht störende Einschlüsse, die die Qualität des fertiggestellten Objekts verringern.

Außerdem kann es vorkommen, dass sich auch in anderen Regionen des Innenraums von Lasersintervorrichtungen Partikel beispielsweise der oben erwähnten Art ablagern und diese Verschmutzungen mit der Zeit den Betrieb der Laservorrichtung beeinträchtigen.

Derartige Ablagerungen entwickeln sich beispielsweise am oben erwähnten Einkoppelfenster.

Die Aufgabe der vorliegenden Erfindung besteht daher darin, eine verbesserte Vorrichtung und ein verbessertes Verfahren zum Herstellen eines dreidimensionalen Objekts bereitzustellen. Dabei soll insbesondere bevorzugt die Wirkung der Absaugung von störenden Partikeln verbessert werden. Eine solche Verbesserung kann beispielsweise darin bestehen, dass auch größere und schwerere Partikel, die beim Verfestigen des Aufbaumaterials entstehen, zuverlässig abgesaugt werden können, wodurch die Qualität des fertiggestellten Objekts zu verbessert bzw. der Betrieb der Vorrichtung vereinfacht werden kann. Eine weitere Verbesserung kann darin bestehen, dass eine effektivere Absaugwirkung von störenden Partikeln auch bei großen Baufeldern und/oder an von einem Baufeld weiter entfernten Bereichen des Innenraums der Vorrichtung erzielt wird.

Die Aufgabe wird gelöst durch eine Vorrichtung gemäß Anspruch 1, eine Steuereinheit gemäß Anspruch 9 und ein Verfahren gemäß Anspruch 11. Weiterführend wird die Aufgabe auch gelöst durch einen Ausrüstsatz (verwendbar etwa zur Nachrüstung bestehender Vorrichtungen) gemäß Anspruch 10, ein Verfahren gemäß Anspruch 12 und ein Computerprogramm gemäß Anspruch 13. Weiterbildungen der Erfindung sind jeweils in den Unteransprüchen angegeben. Dabei können die Verfahren jeweils untereinander als auch durch die untenstehenden bzw. in den Unteransprüchen ausgeführten Merkmale der Vorrichtungen weitergebildet sein oder umgekehrt. Außerdem kann die erfindungsgemäße Vorrichtung insbesondere mit einer erfindungsgemäßen Steuereinheit und einem entsprechenden Ausrüstsatz weitergebildet sein.

Der erfindungsgemäße Ansatz umfasst im Wesentlichen folgende Gesichtspunkte:
a) Anstatt der bisher im Stand der Technik verwendeten fest installierten, d. h. unbeweglichen, Gasabsaugdüse wird nun die Gasabsaugdüse beweglich in der Vorrichtung angeordnet.
b) Die Bewegung bzw. Orientierung der beweglichen Gasabsaugdüse erfolgt gesteuert bzw. geregelt in Abhängigkeit von einer Anzahl von Referenzstellen. Diese Referenzstellen sind bevorzugt innerhalb der Vorrichtung angeordnet und können auch als Referenzorte bezeichnet werden. Zur Steuerung bzw. Regelung der Bewegung bzw. Orientierung der Gasabsaugdüse ist daher vorab die Definition einer oder mehrerer solcher Referenzstellen erforderlich. Als Referenzstelle oder (gleichbedeutend) Referenzort kann ein punkt- oder flächenförmiger (beispielsweise kreisförmig oder elliptisch um einen Punkt angeordneter) Ort dienen, jedoch können auch andere zwei- oder dreidimensionale Formen als Referenzstelle fungieren, beispielsweise auch linienförmige Stellen. Die Referenzstelle(n) bietet/bieten für die Bewegung bzw. Orientierung der Gasabsaugdüse eine Art räumliche oder zweidimensional bezogene Koordinate, anhand derer diese Bewegung bzw. Orientierung gezielter und effektiver erfolgen kann.

Dies sei anhand eines unten nicht weiter ausgeführten Anwendungsbeispiels der vorliegenden Erfindung ausgeführt: Die bewegliche Gasabsaugdüse wird während des Betriebs der Vorrichtung, d. h. während der Herstellung eines dreidimensionalen Objekts, zur Absaugung von Partikeln über dem Baufeld verwendet. Nach Beendigung dieses Herstellungsprozesses wird sie nun gezielt weiter nach oben verfahren, um das Einkoppelfenster der Vorrichtung abzusaugen und so von Verunreinigungen zu reinigen.

Hierzu dient als Referenzstelle für die Steuerung bzw. Regelung der Bewegung der Gasabsaugdüse ein beliebiger, vorab definierter, d. h. festgelegter Ort im Innenraum der Vorrichtung, anhand dessen die Bewegung bzw. Orientierung koordiniert wird. Es kann für diese Steuerung bzw. Regelung eine einzige Referenzstelle verwendet werden, jedoch auch eine Mehrzahl (zwei oder mehr) von Referenzstellen. Ersteres ist weniger aufwändig bei der Referenzstellen-Definition; letzteres kann zu einer präziseren Orientierung der Gasabsaugdüse im Raum führen.

Erfindungsgemäß umfassen die Referenzstellen mindestens eine aktuelle Referenz-Verfestigungsstelle in der Arbeitsebene. Im Gegensatz zum oben beschriebenen Anwendungsbeispiel befindet sich also mindestens eine Referenzstelle auf der Arbeitsebene (d. h. einer vordefinierten Ebene, und zwar der Ebene, auf der die oben erwähnten Prozesspartikel in der Regel entstehen und von wo sie abgesaugt werden sollen) und ist eine (aktuelle) Verfestigungsstelle. Dies kann beispielsweise bedeuten, dass die aktuelle Referenz-Verfestigungsstelle im zeitlichen Verlauf jeweils an einem anderen Ort befindet, nämlich dort, wo (im Beispiel des selektiven Lasersinterns) der Laserstrahl auf der Arbeitsebene aktuell auftrifft. Für die Position bzw. Orientierung der Gasabsaugdüse bedeutet dies, dass sie beispielsweise kontinuierlich (alternativ aber auch schrittweise) adaptiert werden kann und sich ihre Position und Orientierung dabei immer auf die jeweils aktuelle (Referenz-)Verfestigungsstelle bezieht.

Alternativ oder ergänzend kann die erfindungsgemäße Vorrichtung auch dazu ausgebildet sein, eine aktuelle Referenz-Verfestigungsstelle aus einem aktuellen Verfestigungsbereich zu definieren. Dabei wird bevorzugt diejenige Verfestigungsstelle als aktuelle Referenz-Verfestigungsstelle des aktuellen Verfestigungsbereichs definiert, die von einer aktuellen Position der Gasabsaugdüse am weitesten beabstandet ist. Dies bedeutet, dass die definierte aktuelle Referenz-Verfestigungsstelle, die als Referenzstelle für die Bewegung bzw. Orientierung der Gasabsaugdüse dient, nicht zwangsläufig die Stelle sein muss, an der aktuell verfestigt wird. Vielmehr gibt die hier gewählte Referenz-Verfestigungsstelle eine Koordinate vor, aus der abgeleitet werden kann, wie weit die Gasabsaugdüse vom der Gasabsaugdüse abgewandten (äußeren) Rand des aktuellen Verfestigungsbereichs entfernt ist, welche maximale Distanz also zwischen der Gasabsaugdüse und einem möglichen Emissionsort von Partikeln vorliegt, von dem die Gasabsaugdüse die Partikel absaugen können soll.

Die erfindungsgemäße Vorrichtung ist so ausgebildet, dass sie im Betrieb sicherstellt, dass (zumindest in einem vordefinierten Zeitraum) ein Abstand zwischen der Gasabsaugdüse und mindestens einer der Anzahl von Referenzstellen einen vorbestimmten (also vorab definierten) Abstandswert nicht über- und/oder unterschreitet. Ein solcher Abstandswert kann also als Ober- und/oder Untergrenze dienen. Er ist bevorzugt so gewählt, dass die Gasabsaugdüse mit ihrer bestimmungsgemäßen Absaugleistung ein Optimum an Absaugeffekt, insbesondere auf dem Baufeld erzeugt. Ein solches Optimum ist dann erreicht, wenn möglichst im Wesentlichen alle störenden Partikel von der Absaugdüse abgesaugt werden und gleichzeitig keine Störeffekte, etwa durch Gasverwirbelungen an der Pulveroberfläche entstehen. Die Erfinder haben im Rahmen dessen herausgefunden, dass sich eine Obergrenze des Abstandswerts bei einer selektiven Lasersintervorrichtung bevorzugt bei 100mm, besonders bevorzugt bei 80mm und insbesondere bevorzugt bei 50mm besonders vorteilhaft im Sinne des oben genannten Optimums liegt. Die Untergrenze kann nahe 0mm liegen, ist jedoch bevorzugt größer gleich 5mm, besonders bevorzugt größer gleich 10mm - ebenfalls im Sinne des oben erwähnten Optimums.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen der vorliegenden Erfindung geeignet ist.
- Fig. 2: ist eine schematische, perspektivische Ansicht einer beweglichen Gasabsaugdüse gemäß einer ersten Ausführungsform der vorliegenden Erfindung zur Erläuterung einer ersten Ausführungsform des erfindungsgemäßen Verfahrens.
- Fig. 3: ist eine schematische, perspektivische Ansicht einer beweglichen Gasabsaugdüse gemäß einer zweiten Ausführungsform der vorliegenden Erfindung.
- Fig. 4: ist eine schematische, perspektivische Ansicht einer beweglichen Gasabsaugdüse gemäß einer dritten Ausführungsform der vorliegenden Erfindung.
- Fig. 5: ist eine schematische, perspektivische Ansicht einer beweglichen Gasabsaugdüse gemäß einer vierten Ausführungsform der vorliegenden Erfindung.
- Fig. 6: ist eine schematische, perspektivische Ansicht einer zum Bewegen der Gasabsaugdüse der vierten Ausführungsform verwendeten Tripod-Aufhängung.
- Fig. 7: ist eine schematische, perspektivische Ansicht einer beweglichen Gasabsaugdüse gemäß einer fünften Ausführungsform der vorliegenden Erfindung.
- Fig. 8: ist eine schematische Ansicht einer Geschwindigkeitsverteilung eines Gasstroms oberhalb einer Arbeitsebene.
- Fig. 9: ist eine schematische Ansicht von oben auf ein Baufeld mit einer beweglichen Gasabsaugdüse gemäß der zweiten Ausführungsform zur Veranschaulichung einer zweiten Ausführungsform des erfindungsgemäßen Verfahrens.
- Fig. 10: ist eine schematische Ansicht von oben auf ein Baufeld zur Veranschaulichung einer dritten Ausführungsform des erfindungsgemäßen Verfahrens.

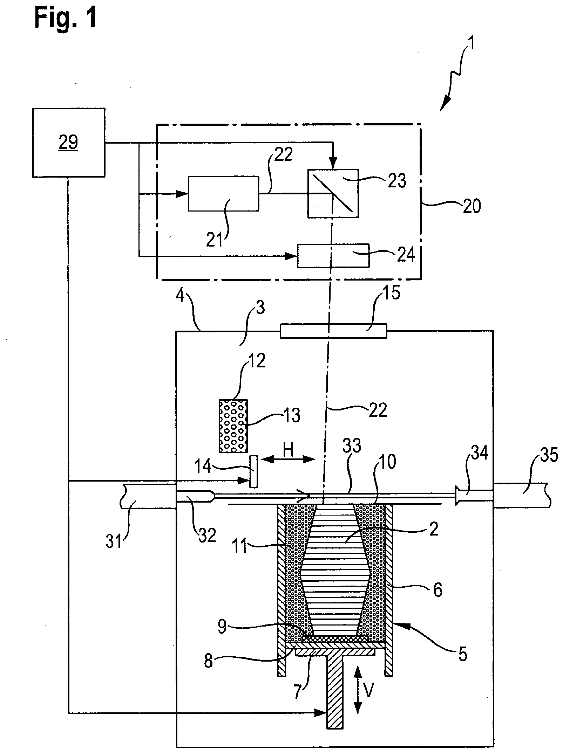

Im Folgenden wird mit Bezug auf Fig. 1 eine Vorrichtung 1 gemäß einer Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung 22.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird.

Zum Erzeugen eines (bevorzugt laminaren) Gasstroms 33 in der Prozesskammer 3 enthält die Lasersintervorrichtung 1 ferner einen Gaszuführkanal 31, eine Gaseinlassdüse 32, eine Gasabsaugdüse 34 und einen Gasabführkanal 35. Auch die Gaszufuhr und - abfuhr kann von der Steuereinheit 29 gesteuert sein. Das aus der Prozesskammer 3 abgesaugte Gas kann einer (nicht gezeigten) Filtervorrichtung zugeführt werden, und das gefilterte Gas kann über den Gaszuführkanal 31 wieder der Prozesskammer 3 zugeführt werden, wodurch ein Umluftsystem mit einem geschlossenen Gaskreislauf gebildet wird. Statt lediglich einer Gaseinlassdüse 32 und einer Gasabsaugdüse 34 können jeweils auch mehrere Düsen vorgesehen sein.

Im Betrieb wird zunächst zum Aufbringen einer Pulverschicht der Träger 7 um eine Höhe abgesenkt, die bevorzugt der gewünschten Schichtdicke entspricht. Unter Verwendung des Beschichters 14 wird nun eine Schicht des pulverförmigen Aufbaumaterials 13 aufgetragen. Die Aufbringung erfolgt zumindest über den gesamten Querschnitt des herzustellenden Objekts 2, vorzugsweise über das gesamte Baufeld 10. Anschließend wird der Querschnitt des herzustellenden Objekts 2 von dem Laserstrahl 22 abgetastet, so dass das pulverförmige Aufbaumaterial 13 an diesen Stellen verfestigt wird. Diese Schritte werden solange wiederholt, bis das Objekt 2 fertiggestellt ist und dem Bauraum entnommen werden kann.

Während des Aufbaus des Objekts 2 wird ein Gas, vorzugsweise ein Schutzgas, beispielsweise Argon und/oder Stickstoff, durch die Gaseinlassdüse 32 in die Prozesskammer eingeleitet und durch die Gasabsaugdüse 34 wieder aus ihr abgesaugt.

Gemäß der vorliegenden Erfindung ist zumindest eine Gasabsaugdüse beweglich so angeordnet, dass sie jeweils in die Nähe des Bereichs der aufgebrachten Pulverschicht gebracht werden kann, die gerade durch den Laserstrahl verfestigt wird.

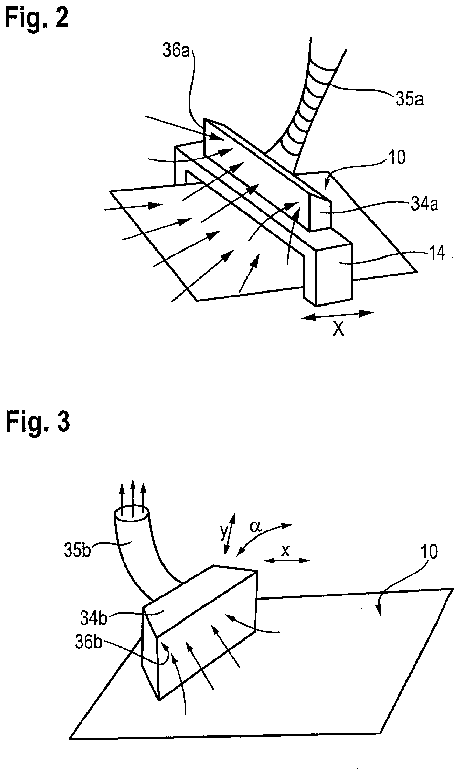

Fig. 2 zeigt schematisch eine erste Ausführungsform der beweglichen Anordnung einer Gasabsaugdüse 34a. In dieser Ausführungsform ist eine Gasabsaugdüse 34a an dem Beschichter 14 angebracht, d. h. mechanisch mit dem Beschichter 14 verbunden, und kann gemeinsam mit dem Beschichter 14 über die Arbeitsebene 10 und die darauf aufgebrachte Pulverschicht verfahren werden. Die Bewegung erfolgt dabei in einer ersten Richtung (x-Richtung) parallel zu der Arbeitsebene hin und her. In der ersten Richtung hat die Gasabsaugdüse 34a eine Gasabsaugöffnung 36a. In einer zweiten Richtung (y-Richtung) senkrecht zu der ersten Richtung, aber ebenfalls parallel zu der Arbeitsebene 10, hat die Gasabsaugdüse 34a eine Breite, die sich annähernd über die gesamte Breite des Beschichters erstreckt und somit annähernd über das gesamte Baufeld, also den Bereich der Arbeitsebene 10, der innerhalb der oberen Öffnung des Behälters 5 liegt. Die Gasabsaugöffnung 36a erstreckt sich annähernd über die gesamte Breite der Gasabsaugdüse 34a.

Insbesondere kann die Gasabsaugdüse 34a mit dem Beschichter 14 so verfahren werden, dass sie sich immer in der Nähe einer aktuellen Verfestigungsstelle befindet, die im Sinne der Erfindung als Referenzstelle verwendet werden kann. Als aktuelle Verfestigungsstelle wird hier die Stelle in der Arbeitsebene 10 bezeichnet, an der gerade der Laserstrahl auf das Pulver auftritt, es erhitzt und somit verfestigt, also die Stelle, an der gerade Verunreinigungen wie Spratzer, Rauche, Schmauche, Dämpfe und/oder Gase entstehen. Anders ausgedrückt wird die Bewegung und/oder Orientierung der Gasabsaugdüse in Abhängigkeit von der aktuellen Verfestigungsstelle so gesteuert, dass insbesondere ein vorbestimmter Abstand zwischen der Verfestigungsstelle und der Gasabsaugdüse nicht überschritten wird, wobei der vorbestimmte Abstand kleiner ist als die Abmessungen des Baufelds.

Im Vergleich zu einem Gasstrom, der durch die ganze Prozesskammer verläuft, können mit dieser beweglichen Gasabsaugdüse 34a auch größere und schwerere Partikel, die sich sonst während des Transports durch die Prozesskammer auf der Pulverschicht absetzen würden, wirkungsvoll aus dem Prozessraum abgesaugt werden. Um solche Partikel mit einem Gasstrom, der durch die ganze Prozesskammer verläuft, abtransportieren zu können, müssten Durchfluss und/oder Geschwindigkeit des Gasstroms erhöht werden, was die Oberfläche der aufgebrachten Pulverschicht stören könnte. Durch die Steuerung der beweglichen Gasabsaugdüse 34a in Abhängigkeit von der aktuellen Verfestigungsstelle können diese Partikel bereits mit kleinerem Durchfluss und/oder kleinerer Geschwindigkeit des Gasstroms wirkungsvoll abgesaugt werden, wodurch eine Störung der Oberfläche der aufgebrachten Pulverschicht vermieden wird. Außerdem erfolgt die Absaugung über das gesamte Baufeld (die gesamte obere Öffnung des Behälters 5) hinweg mit annähernd gleichbleibender Saugstärke, so dass ortsabhängige Unterschiede in der Qualität des aufgebauten Objekts 2 vermieden werden.

Das Verwirklichen der beweglichen Anordnung der Gasabsaugdüse durch mechanisches Verbinden der Gasabsaugdüse mit dem Beschichter (insbesondere durch Anbringen der Gasabsaugdüse an dem Beschichter) hat noch weitere Vorteile.

So ist mit dem Beschichter ohnehin bereits eine über das gesamte Baufeld verfahrbare Einrichtung in der Lasersintervorrichtung vorhanden, so dass zum Bewegen der Gasabsaugdüse keine zusätzliche Bewegungseinrichtung erforderlich ist. Das verringert den Aufwand beim Herstellen der Vorrichtung und die Kosten.

Außerdem kann beispielsweise das Beschichten und Belichten parallel in einem Arbeitsgang durchgeführt werden, das Verfestigen des Pulvers also bereits während des Auftragens der Pulverschicht in dem bereits aufgetragenen und geglätteten Bereich in Fahrtrichtung hinter dem Beschichter erfolgen. Dadurch wird die Herstellungszeit für ein Objekt verkürzt.

Um eine unerwünschte Veränderung der Oberfläche des Baufelds (insbesondere der vom Beschichter aktuelle aufgetragenen Pulverschicht) zu vermeiden, kann die Arbeitsebene 10 nach der Beschichtung geringfügig nach unten gefahren werden. Alternativ oder ergänzend kann eine Verfestigung in einem Bereich der Arbeitsebene "hinter" dem Beschichter durchgeführt werden, d. h. in Beschichtungsrichtung des Beschichters demselben nachfolgend.

Die vorliegende Erfindung ist jedoch nicht auf das Mitführen der Gasabsaugdüse mit dem Beschichter eingeschränkt. Das Bewegen der Gasabsaugdüse über die Arbeitsebene kann auch unabhängig von dem Beschichter erfolgen.

Fig. 3 zeigt schematisch eine zweite Ausführungsform der beweglichen Anordnung einer Gasabsaugdüse 34b. In dieser Ausführungsform ist eine Gasabsaugdüse 34b frei beweglich in der Prozesskammer angebracht. Sie kann dabei Bewegungen in x-Richtung und y-Richtung parallel zu der Arbeitsebene durchführen und sich um einen beliebigen Winkel α um eine Achse - hier senkrecht zu der Arbeitsebene 10 - drehen. Auch eine Drehung um einen beliebigen Winkel (nicht gezeigt) um eine Achse parallel zu der Arbeitsebene 10, d. h. eine Drehung in Richtung der Arbeitsebene 10 oder von der Arbeitsebene 10 weg nach oben ist möglich. Somit kann sie in jeder beliebigen Orientierung an jeden beliebigen Ort des Baufelds gebracht werden. Dadurch muss die Breite der Gasabsaugdüse 34b und ihrer Gasabsaugöffnung 36b sich nicht mehr annähernd über die gesamte Breite des Baufelds erstrecken, sondern kann wesentlich kleiner sein.

Eine freie Beweglichkeit der Gasabsaugdüse 34b kann beispielsweise durch Anbringen an einem Schwenkarm verwirklicht werden, der die erforderlichen Freiheitsgrade der Bewegung aufweist.

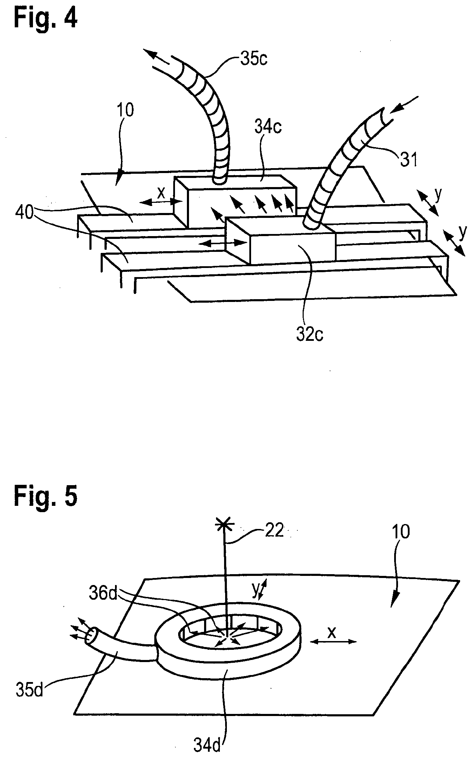

Fig. 4 zeigt schematisch eine dritte Ausführungsform der beweglichen Anordnung einer Gasabsaugdüse 34c. In dieser Ausführungsform sind eine Gaseinlassdüse 32c und eine Gasabsaugdüse 34c einander zugewandt auf einem linearen fahrbaren Portalsystem 40 angebracht. Das Portalsystem 40 kann die Düsen parallel zueinander und mit variablem oder gleichbleibendem Abstand voneinander in x-Richtung und y-Richtung parallel zu der Arbeitsebene bewegen. Auch damit lässt sich erreichen, dass die Düsen an jeden beliebigen Ort des Baufelds gebracht werden, ihre Orientierung und ihr Abstand zueinander und somit die relative Richtung und Größe des Gasstroms zwischen Ihnen kann jedoch erhalten bleiben. Auch in dieser Ausführungsform können die Düsen 32c, 34c eine wesentlich geringere Breite haben als diejenige des Baufelds 10.

Fig. 5 zeigt schematisch eine vierte Ausführungsform der beweglichen Anordnung einer Gasabsaugdüse 34d. In dieser Ausführungsform ist eine Gasabsaugdüse 34d als Ringdüse 34d gebildet, die entlang ihrem inneren Umfang Absaugöffnungen 36d aufweist. Dadurch wird das Gas symmetrisch von der Mitte der Ringdüse 34d aus zu allen Seiten hin abgesaugt. Diese Ringdüse 34d wird vorzugsweise so relativ zum Laserstrahl 22 bewegt, dass der Laserstrahl 22 sich immer annähernd in der Mitte der Ringdüse 34d befindet.

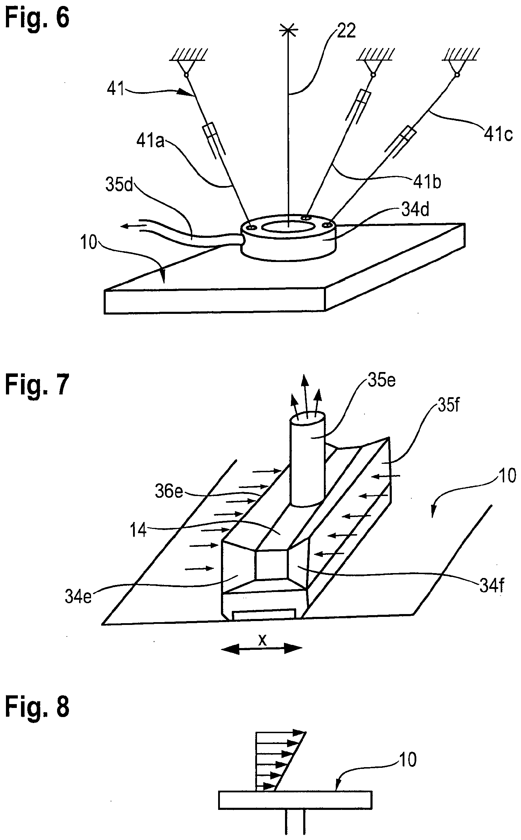

Fig. 6 zeigt schematisch eine Aufhängung dieser Ringdüse 34d an einem Tripod 41. Dieser enthält drei in ihrer Länge veränderliche Beine 41a, 41b und 41c, die zum Beispiel nach dem Teleskop-Prinzip oder mittels Zylinder-Kolben-Kombinationen ein- und ausfahrbar sind. Auch eine gelenkige Palallelogrammführung des Tripod 41 ist möglich, wodurch besonders einfach eine parallele Führung der Ringdüse 34d bewirkt werden kann. An ihrem einen Ende sind diese Beine 41a, 41b, 41c mit der Ringdüse 34d verbunden, an ihrem anderen Ende ortsfest aber schwenkbar im Raum verankert. Durch koordiniertes Ändern der Einstellungen der Abmessungen der drei Beine 41a, 41b und 41c kann die Ringdüse 34d parallel zu der Arbeitsebene 10 über das Baufeld bewegt werden.

In den oben beschriebenen Ausführungsformen sind Fälle dargestellt, bei denen jeweils eine einzelne Gasabsaugdüse beweglich angeordnet ist. Es können aber in jeder dieser Ausführungsformen zwei oder mehr Gasabsaugdüsen gekoppelt miteinander oder unabhängig voneinander beweglich angeordnet sein.

Als Beispiel zeigt Fig. 7 eine fünfte Ausführungsform der beweglichen Anordnung einer Gasabsaugdüse. In dieser Ausführungsform sind zwei Gasabsaugdüsen 34e und 34f an einem Beschichter 14 angebracht und in die zwei Verfahrrichtungen des Beschichters 14 ausgerichtet. Dabei kann beispielsweise bei einer Fahrt des Beschichters in die eine Richtung eine der Düsen 34e, 34f aktiviert sein und bei einer Fahrt in die entgegengesetzte Richtung die andere. Somit kann das parallele Durchführen von Beschichten und Belichten auch bei Beschichtern durchgeführt werden, die für ein Aufbringen der Pulverschicht in beiden Fahrtrichtungen ausgelegt sind. Alternativ können beide Düsen 34e, 34f gleichzeitig betrieben werden, beispielsweise, wenn beidseits des Beschichters 14 gleichzeitig eine Verfestigung in der Arbeitsebene stattfinden soll.

Bei allen oben beschriebenen Ausführungsformen kann die Gaseinlassdüse 32 und/oder die Gasabsaugdüse 34 jeweils so gebildet sein, dass die Geschwindigkeit des Gasstroms von der Höhe über der Arbeitsebene abhängt.

Fig. 8 ist eine schematische Ansicht einer Geschwindigkeitsverteilung eines Gasstroms oberhalb der Arbeitsebene 10. Nahe der Pulveroberfläche ist die Geschwindigkeit niedrig, damit kein Pulver weggeblasen bzw. abgesaugt wird. Das ist besonders wichtig bei der Verwendung von Leichtmetallpulvern wie z.B. Aluminium. Nach oben hin, d. h. in Fortführung einer Richtung von der Arbeitsebene 10 zu der Gasabsaugdüse (bzw. analog einer Gaseinlassdüse), nimmt die Geschwindigkeit zu, so dass beispielsweise Spratzer zuverlässig abgesaugt werden können. Eine solche Geschwindigkeitsverteilung kann beispielsweise dadurch verwirklicht werden, dass die Gaseinlassdüse 32 und/oder die Gasabsaugdüse 34 senkrecht übereinander liegende Kanäle enthält, die voneinander verschieden gebildet sind und/oder unterschiedlich mit Gasüberdruck bzw. -unterdruck beaufschlagt werden.

Die in den oben beschriebenen Ausführungsformen dargestellten Einheiten, die die Bewegung der Gasabsaugdüse bewirken, dienen nur als Beispiele und stellen keine Einschränkungen dar. Sie können auch zwischen den Ausführungsformen ausgetauscht werden. So kann beispielsweise das in Fig. 4 gezeigte und in der dritten Ausführungsform beschriebene Portal 40 auch zum Bewegen einer ringförmigen Gasabsaugdüse verwendet werden, wie sie in Fig. 5 gezeigt und in der vierten Ausführungsform beschrieben ist, oder der in Fig. 7 gezeigte und in der vierten Ausführungsform beschriebene Tripod kann auch zum Bewegen einer Kombination aus Gaseinlassdüse 32 und Gasabsaugdüse 34 verwendet werden, wie sie in Fig. 4 gezeigt und in der dritten Ausführungsform beschrieben ist. Es können in jeder Ausführungsform auch andere Einrichtungen (Aktoren) verwendet werden, die zum Bewegen der Gasabsaugdüse über das gesamte Baufeld geeignet sind.

Da die Bewegung des Beschichters 14 von der Steuereinheit 29 gesteuert wird, wird auch die Bewegung der Gasabsaugdüse 34, wenn sie an dem Beschichter 14 angebracht ist, von der Steuereinheit 29 gesteuert. Aber auch dann, wenn die Gasabsaugdüse 34 nicht mechanisch mit dem Beschichter 14 verbunden ist, kann die Bewegung der Gasabsaugdüse 34 von der Steuereinheit 29 gesteuert oder geregelt werden. Da die Steuereinheit 29 auch die Bestrahlungsvorrichtung 20 steuert und damit die aktuelle und künftige Verfestigungsstellen festlegt, kann die Steuereinheit 29 die Bewegung der Gasabsaugdüse 34 in Abhängigkeit von diesen Verfestigungsstellen als Referenzstellen steuern oder regeln. Wenn die Gasabsaugdüse 34 von einer separaten Steuereinheit gesteuert oder geregelt wird, wird zu diesem Zweck die Information über die entsprechenden Verfestigungsstellen von der Steuereinheit 29 an die separate Steuereinheit übergeben.

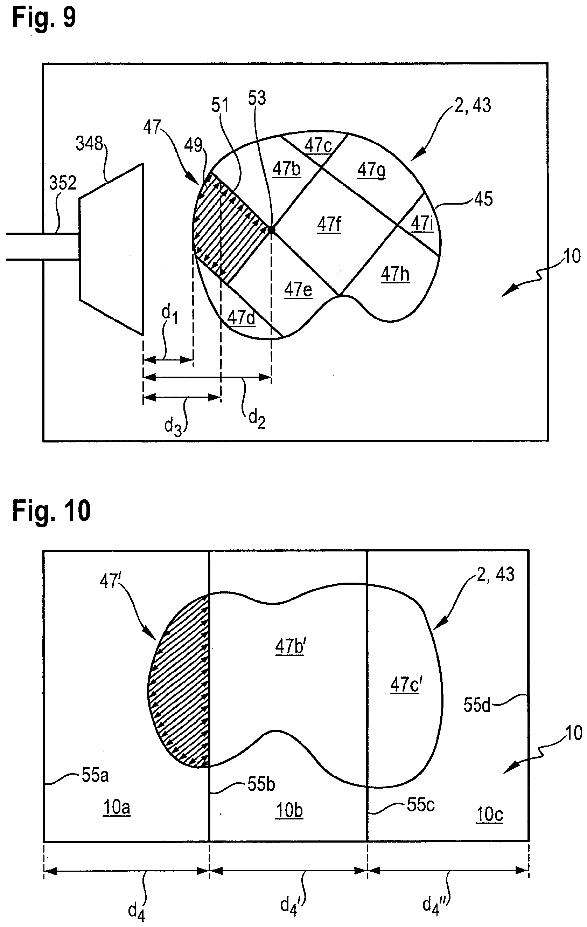

Fig. 9 zeigt eine schematische Ansicht von oben auf ein Baufeld 10 mit einer beweglichen Gasabsaugdüse 34b gemäß der zweiten Ausführungsform (vgl. Fig. 3) zur Veranschaulichung einer ersten Ausführungsform des erfindungsgemäßen Verfahrens.

In einer aktuellen Schicht auf der Arbeitsebene 10 wird das Objekt 2 in einem Verfestigungsbereich 43 sukzessive verfestigt. Hierzu ist der Verfestigungsbereich 43 in eine Kontur 45 und sogenannte Belichtungsfelder 47a-i bzw. Verfestigungsfelder 47a-i unterteilt worden, in denen nacheinander beispielsweise in der Buchstabenreihenfolge a bis i gemäß der Bezugszeichen 47a-i eine Verfestigung durchgeführt wird. Diese Verfestigung erfolgt entlang von Scanvektoren 49, die hier schematisch in einem aktuellen ersten Verfestigungsfeld 47a angedeutet sind. Im hier dargestellten Zustand wird an einer Verfestigungsstelle 51 im ersten Verfestigungsfeld 47a verfestigt. Eine Bewegung bzw. Orientierung der Gasabsaugdüse 34b kann daher in Abhängigkeit (gemäß der ersten Ausführungsform des erfindungsgemäßen Verfahrens - s. o.) vom Verlauf dieser Verfestigungsstelle 51 als Referenz-Verfestigungsstelle 51 entlang der Scanvektoren 49 erfolgen und beispielsweise diesem Verlauf in einem Verlaufsabstand d₃ kontinuierlich oder schrittweise folgen.

Das erste Verfestigungsfeld 47a weist eine Verfestigungsstelle 53 auf, die zwar aktuell nicht verfestigt wird, jedoch in der zweiten Ausführungsform des Verfahrens anstatt der Verfestigungsstelle 51 als Referenz-Verfestigungsstelle 53 dienen soll: Diese Referenz-Verfestigungsstelle 53 ist diejenige Stelle im aktuellen Verfestigungsfeld 47a, die von der aktuellen Position der Gasabsaugdüse 34b am weitesten beabstandet ist. Bis zu dieser Referenz-Verfestigungsstelle 53 muss also die Absaugwirkung der Absaugdüse 34b reichen, um ein ausreichendes Absaugverhalten zu erzeugen. Daher wird die Position und/oder Orientierung der Gasabsaugdüse 34b so eingestellt, dass der Abstand d₂ zwischen der Absaugdüse 34b und der Referenz-Verfestigungsstelle 53 einen vorbestimmten Abstandswert, vorzugsweise 100m, besonders bevorzugt 80mm, und weiter insbesondere bevorzugt 50mm, nicht überschreitet. Auf der anderen Seite darf ein Abstand d₁ zwischen der Gasabsaugdüse 34b und dem ihr zugewandten Rand des aktuellen Verfestigungsfelds 47a auch nicht geringer sein als ein weiterer, vorbestimmter Abstandswert. Insbesondere muss vermieden werden, dass die Gasabsaugdüse 34b in das aktuelle Verfestigungsfeld 47a hineinragt, da sie sonst den Verfestigungsvorgang behindert. Dieselbe Regelung gilt bevorzugt auch für den oben erwähnten Verlaufsabstand d₃ bei der ersten Ausführungsform des erfindungsgemäßen Verfahrens.

Die zweite Ausführungsform bietet den Vorteil, dass die Gasabsaugdüse 34b nicht ständig mitgeführt werden muss, sondern an einer oder mehreren Position während der Verfestigung in einem Verfestigungsfeld feststehen kann.

Fig. 10 dient zur Illustration der dritten Ausführungsform des erfindungsgemäßen Verfahrens. Hier ist das Baufeld 10 in mehrere (hier drei) Baufeldbereiche 10a, 10b, 10c unterteilt. Der erste Baufeldbereich 10a reicht entlang einer ersten Distanz d₄ von einem ersten (linken) Rand 55a des Baufelds 10 bis zu einer ersten Begrenzungslinie 55b, die sich hier parallel zum ersten Rand 55a erstreckt. Von der ersten Begrenzungslinie 55b entlang einer zweiten Distanz d₄' erstreckt sich der zweite Baufeldbereich 10b bis zu einer zweiten Begrenzungslinie 55c (die hier wieder parallel zur ersten Begrenzungslinie 55b ausgerichtet ist), an den dann der dritte Baufeldbereich 10c entlang einer dritten Distanz d₄" bis zum zweiten (rechten) Rand des Baufelds 10 anschließt. Im vorliegenden Beispiel sind die erste, zweite und dritte Distanz d₄, d₄', d₄" gleich groß. Das herzustellende Objekt 2 erstreckt sich in der hier vorliegenden Schicht über alle drei Baufeldbereiche 10a, 10b, 10c, wobei die Baufeldbereiche 10a, 10b, 10c in der Schicht im Objekt 2 Verfestigungsfelder 47a', 47b', 47c' definieren.

In der dritten Ausführungsform des Verfahrens wird eine bewegliche Gasabsaugdüse (nicht gezeigt), vorzugsweise eine solche, die die gesamte Breite des Baufelds 10 (also die Erstreckung senkrecht zu den Distanzen d₄, d₄', d₄") mit ihrer Saugwirkung abdeckt, in Abhängigkeit von den Rändern 55a, 55d und den Begrenzungslinien 55b, 55c als Referenzstellen 55a, 55b, 55c, 55d verfahren. Beispielsweise kann hierzu die Gasabsaugdüse 34a verwendet werden. Die Distanzen d₄, d₄', d₄" werden dabei bevorzugt so festgelegt, dass ihre Werte mit den vorbestimmten Abstandswerten übereinstimmen, die zur zweiten Ausführungsform des Verfahrens bereits beschrieben wurden. Auch bei dieser dritten Ausführungsform kann daher die entsprechende Gasabsaugdüse zeitweise feststehend an einem Ort betrieben werden, beispielsweise (und dies ist bevorzugt) feststehend an einem Ort pro Baufeldbereich 10a, 10b, 10c respektive Verfestigungsfeld 47a', 47b', 47c'.

Auch ansonsten können Merkmale der verschiedenen Ausführungsformen miteinander kombiniert werden, wo dies möglich ist.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials angewendet werden, bei denen das Absaugen eines Gases, insbesondere eines Schutzgases verwendet wird.

Der Laser kann beispielsweise ein Gas- oder Festkörperlaser bzw. eine Laserdiode umfassen. Allgemein kann jede Einrichtung verwendet werden, mit der Energie selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das Herstellen eines Objekts mittels schichtweisen Auftragens und selektiven Verfestigens eines Aufbaumaterials unabhängig von der Art und Weise, in der das Aufbaumaterial verfestigt wird.

Bei Verwendung eines Pulvers als Aufbaumaterial können verschiedene Arten von Pulver verwendet werden, insbesondere Metallpulver, Kunststoffpulver, Keramikpulver, Sand, gefüllte oder gemischte Pulver. Als Schutzgas wird je nach verwendetem Aufbaumaterial ein Gas verwendet, das mit dem Aufbaumaterial im Wesentlichen keine chemische Reaktion eingeht, beispielsweise bei Kunststoffpulver vorzugsweise Stickstoff oder bei Metallpulver vorzugsweise Argon und/oder Stickstoff.

## Patentansprüche

1. Vorrichtung (1) zum Herstellen eines dreidimensionalen Objekts (2) durch schichtweises Verfestigen von Aufbaumaterial (13) an einem Querschnitt des herzustellenden Objekts (2) in einer jeweiligen Schicht entsprechenden Stellen (43) mit
einer Beschichtungsvorrichtung (12-14) zum Aufbringen einer Schicht des Aufbaumaterials (13) auf eine Arbeitsebene (10),
einer Verfestigungsvorrichtung (20) zum selektiven Verfestigen des Aufbaumaterials (13) in der aufgebrachten Schicht und
einer Gasabsaugdüse (34) zum Absaugen von Gas aus der Vorrichtung (1),
wobei die Gasabsaugdüse (34) beweglich angeordnet ist, und
einer Steuereinheit (29), mit der eine Bewegung und/oder Orientierung der Gasabsaugdüse (34) in Abhängigkeit von einer Anzahl von Referenzstellen (51, 53, 55a, 55b, 55c, 55d) gesteuert oder geregelt wird,
wobei die Referenzstellen mindestens eine aktuelle Referenz-Verfestigungsstelle (51, 53) in der Arbeitsebene (10) umfassen, und
wobei die Vorrichtung so ausgebildet ist, dass sie sicherstellt, dass zumindest in einem vordefinierten Zeitraum ein Abstand (d1, d2, d3, d4, d4', d4") zwischen der Gasabsaugdüse (34) und mindestens einer der Anzahl von Referenzstellen (51, 53) einen vorbestimmten Abstandswert nicht über- und/oder unterschreitet.

2. Vorrichtung gemäß Anspruch 1,
wobei die Vorrichtung ausgebildet ist zur Definition der aktuellen Referenz-Verfestigungsstelle (51, 53) aus einem aktuellen Verfestigungsfeld (47a, 47a'), bei dem als aktuelle Referenz-Verfestigungsstelle diejenige Verfestigungsstelle (53) des aktuellen Verfestigungsfelds (47a) definiert wird, die von einer aktuellen Position der Gasabsaugdüse (34) am weitesten beabstandet ist.

3. Vorrichtung (1) gemäß einem der Ansprüche 1 oder 2, bei der
die Beschichtungsvorrichtung einen Beschichter (14) enthält, der parallel zu der Arbeitsebene verfahrbar ist, und
die Gasabsaugdüse (34a) mit dem Beschichter (14) mechanisch verbunden ist.

4. Vorrichtung (1) gemäß einem der Ansprüche 1 bis 3, bei der die Gasabsaugdüse (34b) zweidimensional in zwei Richtungen (x, y) parallel zu der Arbeitsebene (10) bewegbar angeordnet ist.

5. Vorrichtung (1) gemäß einem der Ansprüche 1 bis 4, bei der die Gasabsaugdüse (34b) um mindestens eine Achse, bevorzugt um eine Achse senkrecht zu der Arbeitsebene (10) und/oder um eine Achse parallel zu der Arbeitsebene (10), drehbar angeordnet ist.

6. Vorrichtung (1) gemäß einem der Ansprüche 1 bis 5,
die weiter eine Gaseinlassdüse (32c) zum Einleiten eines Gases in die Vorrichtung enthält,
wobei die Gaseinlassdüse (32c) und die Gasabsaugdüse (34c) einander zugewandt so angebracht sind, dass sie parallel zueinander, bevorzugt mit gleichbleibendem Abstand voneinander, parallel zu der Arbeitsebene (10) bewegbar sind.

7. Vorrichtung (1) gemäß einem der Ansprüche 1 bis 5, bei der die Gasabsaugdüse (34d) eine Ringdüse umfasst.

8. Vorrichtung (1) gemäß einem der Ansprüche 1 bis 7, bei der die Gaseinlassdüse (32) und/oder die Gasabsaugdüse (34) jeweils so ausgebildet ist, dass eine Geschwindigkeit eines durch sie hervorgerufenen Gasstroms auf der Höhe der Arbeitsebene (10) am geringsten ist.

9. Steuereinheit (29) für eine Vorrichtung (1) zum Herstellen eines dreidimensionalen Objekts (2) durch schichtweises Verfestigen von Aufbaumaterial (13) an einem Querschnitt des herzustellenden Objekts (2) in einer jeweiligen Schicht entsprechenden Stellen (43), insbesondere für eine Vorrichtung (1) gemäß einem der Ansprüche 1 bis 8, wobei die Vorrichtung umfasst:
eine Beschichtungsvorrichtung (12-14) zum Aufbringen einer Schicht des Aufbaumaterials (13) auf eine Arbeitsebene (10),
eine Verfestigungsvorrichtung (20) zum selektiven Verfestigen des Aufbaumaterials (13) in der aufgebrachten Schicht und
eine Gasabsaugdüse (34) zum Absaugen von Gas aus der Vorrichtung (1),
wobei die Gasabsaugdüse (34) beweglich angeordnet ist, und
die Steuereinheit (29) vorzugsweise zum Steuern oder Regeln einer Verfestigungsvorrichtung (20) zum Festlegen von Verfestigungsstellen (51, 53) ausgebildet ist,
und wobei die Steuereinheit (29) ausgebildet ist, eine Bewegung und/oder Orientierung der Gasabsaugdüse (34) in Abhängigkeit von einer Anzahl von Referenzstellen (51, 53, 55a, 55b, 55c, 55d) zu steuern oder zu regeln,
wobei die Referenzstellen mindestens eine aktuelle Referenz-Verfestigungsstelle (51, 53) in der Arbeitsebene (10) umfassen, und
wobei die Steuereinheit sicherstellt, dass zumindest in einem vordefinierten Zeitraum ein Abstand (d1, d2, d3, d4, d₄', d4") zwischen der Gasabsaugdüse (34) und mindestens einer der Anzahl von Referenzstellen (51, 53) einen vorbestimmten Abstandswert nicht über- und/oder unterschreitet.

10. Ausrüstsatz mit einer Gasabsaugdüse (34) und einer Steuereinheit (29) gemäß Anspruch 9.

11. Verfahren zum Bewegen und/oder Orientieren einer beweglichen Gasabsaugdüse (34) in einer Vorrichtung (1) zum Herstellen eines dreidimensionalen Objekts (2) durch schichtweises Verfestigen von Aufbaumaterial (13) an einem Querschnitt des herzustellenden Objekts (2) in einer jeweiligen Schicht entsprechenden Stellen (43), insbesondere einer Vorrichtung (1) gemäß einem der Ansprüche 1 bis 8, wobei die Vorrichtung (1) umfasst:
eine Beschichtungsvorrichtung (12-14) zum Aufbringen einer Schicht des Aufbaumaterials (13) auf eine Arbeitsebene (10),
eine Verfestigungsvorrichtung (20) zum selektiven Verfestigen des Aufbaumaterials (13) in der aufgebrachten Schicht und
die bewegliche Gasabsaugdüse (34) zum Absaugen von Gas aus der Vorrichtung (1),
wobei die Bewegung und/oder Orientierung der Gasabsaugdüse (34) in Abhängigkeit von einer Anzahl von Referenzstellen (51, 53, 55a, 55b, 55c, 55d) gesteuert oder geregelt wird, und
wobei die Referenzstellen mindestens eine aktuelle Referenz-Verfestigungsstelle (51, 53) in der Arbeitsebene (10) umfassen, und
wobei sichergestellt wird, dass zumindest in einem vordefinierten Zeitraum ein Abstand (d1, d2, d3, d4, d₄', d4") zwischen der Gasabsaugdüse (34) und mindestens einer der Anzahl von Referenzstellen (51, 53) einen vorbestimmten Abstandswert nicht über- und/oder unterschreitet.

12. Verfahren zum Herstellen eines dreidimensionalen Objekts (2) durch schichtweises Aufbringen und selektives Verfestigen eines Aufbaumaterials (13) mit den Schritten:
a) Aufbringen einer Schicht eines Aufbaumaterials (13) auf eine Arbeitsebene (10),
b) selektives Verfestigen der Schicht des Aufbaumaterials (13) an den dem Querschnitt des herzustellenden Objekts (2) entsprechenden Stellen (43) und
c) Wiederholen der Schritte a) und b), bis das Objekt (2) fertiggestellt ist,
wobei während der Herstellung des Objekts ein Gas durch eine Gasabsaugdüse (34) abgesaugt wird, und wobei eine Bewegung und/oder Orientierung der Gasabsaugdüse (34) mit einem Verfahren gemäß Anspruch 11 erfolgt.

13. Computerprogramm, umfassend Befehle, die bewirken, dass die Vorrichtung gemäß einem der Ansprüche 1 bis 8 das Verfahren gemäß einem der Ansprüche 11 bis 12 ausführt.

## Claims

1. Device (1) for manufacturing a three-dimensional object (2) by solidifying building material (13), layer by layer, at positions (43) corresponding to a cross-section of the object (2) to be manufactured in a respective layer, comprising
a recoating device (12-14) for applying a layer of the building material (13) to a working plane (10),
a solidification device (20) for selectively solidifying the building material (13) in the applied layer, and
a gas suction nozzle (34) for extracting gas from the device (1),
wherein the gas suction nozzle (34) is movably arranged, and
a control unit (29) with which a movement and/or an orientation of the gas suction nozzle (34) is controlled or regulated depending on a number of reference positions (51, 53, 55a, 55b, 55c, 55d),
wherein the reference positions comprise at least a current reference solidification position (51, 53) in the working plane (10), and
wherein the device is configured such that it ensures that, at least in a predefined period of time, a distance (d1, d2, d3, d4, d4', d4") between the gas suction nozzle (34) and at least one of the number of reference positions (51, 53) does not exceed and/or fall below a predetermined distance value.

2. Device according to claim 1,
wherein the device is configured to define the current reference solidification position (51, 53) in a current solidification field (47a, 47a'), wherein the current reference solidification position is defined as that solidification position (53) of the current solidification field (47a) which is furthest away from a current position of the gas suction nozzle (34).

3. Device (1) according to any one of claims 1 or 2, wherein
the recoating device comprises a recoater (14), which is movable parallel to the working plane, and
the gas suction nozzle (34a) is mechanically connected to the recoater (14).

4. Device (1) according to one of claims 1 to 3, wherein the gas suction nozzle (34b) is arranged to be movable two-dimensionally in two directions (x, y) parallel to the working plane (10).

5. Device (1) according to one of claims 1 to 4, wherein the gas suction nozzle (34b) is arranged to be rotatable about at least one axis, preferably about an axis perpendicular to the working plane (10) and/or about an axis parallel to the working plane (10).

6. Device (1) according to any one of claims 1 to 5,
further comprising a gas inlet nozzle (32c) for introducing a gas into the device,
wherein the gas inlet nozzle (32c) and the gas suction nozzle (34c) are arranged facing each other such that they are movable parallel to each other, preferably at a constant distance from each other, and parallel to the working plane (10) .

7. Device (1) according to any one of claims 1 to 5, wherein the gas suction nozzle (34d) comprises a ring nozzle.

8. Device (1) according to any one of claims 1 to 7, wherein the gas inlet nozzle (32) and/or the gas suction nozzle (34) are each configured such that a speed of a gas flow caused by them is lowest at the level of the working plane (10).

9. Control unit (29) for a device (1) for manufacturing a three-dimensional object (2) by solidifying building material (13), layer by layer, at positions (43) corresponding to a cross-section of the object (2) to be manufactured in a respective layer, in particular for a device according to any one of claims 1 to 8, wherein the device comprises:
a recoating device (12-14) for applying a layer of the building material (13) to a working plane (10),
a solidification device (20) for selectively solidifying the building material (13) in the applied layer, and
a gas suction nozzle (34) for extracting gas from the device (1),
wherein the gas suction nozzle (34) is movably arranged, and
wherein preferably the control unit (29) is configured to control or regulate a solidification device (20) for defining solidification positions (51, 53),
and wherein the control unit (29) is configured to control or regulate a movement and/or an orientation of the gas suction nozzle (34) depending on a number of reference positions (51, 53, 55a, 55b, 55c, 55d),
wherein the reference positions comprise at least a current reference solidification position (51, 53) in the working plane (10), and
wherein the control unit ensures that, at least in a predefined period of time, a distance (d1, d2, d3, d4, d4', d4") between the gas suction nozzle (34) and at least one of the number of reference positions (51, 53) does not exceed and/or fall below a predetermined distance value.

10. Equipment kit comprising a gas suction nozzle (34) and a control unit (29) according to claim 9.

11. Method for moving and/or orienting a moveable gas suction nozzle (34) in a device for manufacturing a three-dimensional object (2) by solidifying building material (13), layer by layer, at positions (43) corresponding to a cross-section of the object (2) to be manufactured in a respective layer, in particular for a device according to any one of claims 1 to 8, wherein the device comprises:
a recoating device (12-14) for applying a layer of the building material (13) to a working plane (10),
a solidification device (20) for selectively solidifying the building material (13) in the applied layer, and
the moveable gas suction nozzle (34) for extracting gas from the device (1),
wherein the movement and/or an orientation of the gas suction nozzle (34) is controlled or regulated depending on a number of reference positions (51, 53, 55a, 55b, 55c, 55d),
wherein the reference positions comprise at least a current reference solidification position (51, 53) in the working plane (10), and
wherein it is ensured that, at least in a predefined period of time, a distance (d1, d2, d3, d4, d4', d4") between the gas suction nozzle (34) and at least one of the number of reference positions (51, 53) does not exceed and/or fall below a predetermined distance value.

12. Method for manufacturing a three-dimensional object (2) by solidifying building material (13), layer by layer, at positions (43) corresponding to a cross-section of the object (2) to be manufactured in a respective layer, comprising the following steps:
a) Applying a layer of a building material (13) to a working plane (10),
b) Selectively solidifying the layer of the building material (13) at the positions (43) corresponding to the cross-section of the object (2), and
repeating the steps a) and b) until the three-dimensional object (2) is completed,
wherein during the manufacture of the three-dimensional object, a gas is extracted through a gas suction nozzle (34), and wherein a movement and/or an orientation of the gas suction nozzle (34) is carried out by a method according to claim 11.

13. Computer program, comprising commands which cause the device according to any one of claims 1 to 8 to execute the method according to any one of claims 11 to 12.

## Revendications

1. Dispositif (1) pour la fabrication d'un objet tridimensionnel (2) par solidification couche par couche d'un matériau de construction (13) en des positions (43) correspondantes à une section transversale de l'objet (2) à fabriquer dans une couche respective, comprenant :
un dispositif d'enduction (12-14) pour appliquer une couche du matériau de construction (13) sur un plan de travail (10),
un dispositif de solidification (20) pour solidifier sélectivement le matériau de construction (13) dans la couche appliquée, et
une buse d'aspiration de gaz (34) pour aspirer le gaz du dispositif (1),
la buse d'aspiration de gaz (34) étant disposée de manière mobile, et
une unité de commande (29) par laquelle un déplacement et/ou une orientation de la buse d'aspiration de gaz (34) sont commandés ou régulés en fonction d'un certain nombre de points de référence (51, 53, 55a, 55b, 55c, 55d),
dans lequel les points de référence comprennent au moins un point de solidification de référence actuel (51, 53) dans le plan de travail (10), et
dans lequel le dispositif est configuré pour garantir au moins pendant une période prédéfinie, qu'une distance (d1, d2, d3, d4, d4', d4") entre la buse d'aspiration de gaz (34) et au moins l'un du nombre de points de référence (51, 53) ne dépasse pas une valeur de distance prédéterminée et/ou ne passe pas en dessous de celle-ci.

2. Dispositif selon la revendication 1,
dans lequel le dispositif est configuré pour définir le point de solidification de référence actuel (51, 53) à partir d'un champ de solidification actuel (47a, 47a'), dans lequel on définit comme point de solidification de référence actuel le point de solidification (53) du champ de solidification actuel (47a) qui est le plus éloigné d'une position actuelle de la buse d'aspiration de gaz (34).

3. Dispositif (1) selon l'une des revendications 1 ou 2, dans lequel
le dispositif d'enduction comprend un enducteur (14) qui est déplaçable parallèlement au plan de travail, et
la buse d'aspiration de gaz (34a) est reliée mécaniquement à l'enducteur (14).

4. Dispositif (1) selon l'une des revendications 1 à 3, dans lequel la buse d'aspiration de gaz (34b) est disposée de manière déplaçable dans deux dimensions selon deux directions (x, y) parallèles au plan de travail (10).

5. Dispositif (1) selon l'une des revendications 1 à 4, dans lequel la buse d'aspiration de gaz (34b) est disposée de manière tournante autour d'au moins un axe, de préférence autour d'un axe perpendiculaire au plan de travail (10) et/ou autour d'un axe parallèle au plan de travail (10).

6. Dispositif (1) selon l'une quelconque des revendications 1 à 5,
qui comprend en outre une buse d'admission de gaz (32c) pour introduire un gaz dans le dispositif,
dans lequel la buse d'admission de gaz (32c) et la buse d'aspiration de gaz (34c) sont montées face à face de manière à être déplaçables parallèlement l'une à l'autre, de préférence à une distance constante l'une de l'autre, parallèlement au plan de travail (10).

7. Dispositif (1) selon l'une quelconque des revendications 1 à 5, dans lequel la buse d'aspiration de gaz (34d) comprend une buse annulaire.

8. Dispositif (1) selon l'une des revendications 1 à 7, dans lequel la buse d'admission de gaz (32) et/ou la buse d'aspiration de gaz (34) sont configurées chacune de manière qu'une vitesse d'un flux de gaz qu'elles provoquent soit la plus faible au niveau du plan de travail (10).

9. Unité de commande (29) pour un dispositif (1) pour la fabrication d'un objet tridimensionnel (2) par solidification couche par couche d'un matériau de construction (13) en des positions (43) correspondantes à une section transversale de l'objet (2) à fabriquer dans une couche respective, notamment pour un dispositif (1) selon l'une quelconque des revendications 1 à 8, ledit dispositif comprenant :
un dispositif d'enduction (12-14) pour appliquer une couche du matériau de construction (13) sur un plan de travail (10),
un dispositif de solidification (20) pour solidifier sélectivement le matériau de construction (13) dans la couche appliquée, et
une buse d'aspiration de gaz (34) pour aspirer le gaz du dispositif (1),
dans laquelle la buse d'aspiration de gaz (34) est disposée de manière mobile, et l'unité de commande (29) est de préférence configurée pour commander ou réguler un dispositif de solidification (20) pour définir des emplacements de consolidation (51, 53),
et dans laquelle l'unité de commande (29) est configurée pour commander ou réguler un déplacement et/ou une orientation de la buse d'aspiration de gaz (34) en fonction d'un certain nombre de points de référence (51, 53, 55a, 55b, 55c, 55d),
dans laquelle les points de référence comprennent au moins un point de solidification de référence actuel (51, 53) dans le plan de travail (10), et
dans laquelle l'unité de commande garantit au moins pendant une période prédéfinie, qu'une distance (d1, d2, d3, d4, d4', d4") entre la buse d'aspiration de gaz (34) et au moins l'un du nombre de points de référence (51, 53) ne dépasse pas une valeur de distance prédéfinie et/ou ne passe pas en dessous de celle-ci.

10. Kit d'équipement comprenant une buse d'aspiration de gaz (34) et une unité de commande (29) selon la revendication 9.

11. Procédé de déplacement et/ou d'orientation d'une buse d'aspiration de gaz (34) mobile dans un dispositif (1) pour la fabrication d'un objet tridimensionnel (2) par solidification couche par couche d'un matériau de construction (13) en des positions (43) correspondantes à une section transversale de l'objet (2) à fabriquer dans une couche respective, notamment un dispositif (1) selon l'une quelconque des revendications 1 à 8, ledit dispositif (1) comprenant :
un dispositif d'enduction (12-14) pour appliquer une couche du matériau de construction (13) sur un plan de travail (10),
un dispositif de solidification (20) pour solidifier sélectivement le matériau de construction (13) dans la couche appliquée, et
la buse mobile d'extraction de gaz (34) pour extraire le gaz du dispositif (1),
dans lequel le déplacement et/ou l'orientation de la buse d'aspiration de gaz (34) sont commandés ou régulés en fonction d'un certain nombre de points de référence (51, 53, 55a, 55b, 55c, 55d), et dans lequel
les points de référence comprennent au moins un point de solidification de référence actuel (51, 53) dans le plan de travail (10), et
dans lequel il est assuré au moins pendant une période prédéfinie, qu'une distance (d1, d2, d3, d4, d4', d4") entre la buse d'aspiration de gaz (34) et au moins l'un du nombre de points de référence (51, 53) ne dépasse pas une valeur de distance prédéterminée et/ou ne passe pas en dessous de celle-ci.

12. Procédé de fabrication d'un objet tridimensionnel (2) par application couche par couche et solidification sélective d'un matériau de construction (13), comprenant les étapes suivantes :
a) appliquer une couche d'un matériau de construction (13) sur un plan de travail (10),
b) solidifier sélectivement la couche du matériau de construction (13) aux positions (43) correspondantes à la section transversale de l'objet (2) à fabriquer, et
c) répéter les étapes a) et b) jusqu'à ce que l'objet (2) soit terminé,
dans lequel, pendant la fabrication de l'objet, un gaz est aspiré par une buse d'aspiration de gaz (34), et dans lequel un déplacement et/ou une orientation de la buse d'aspiration de gaz (34) est effectuée par un procédé selon la revendication 11.

13. Programme d'ordinateur comprenant des instructions qui amènent le dispositif selon l'une quelconque des revendications 1 à 8 à exécuter le procédé selon l'une quelconque des revendications 11 à 12.
